# EUROPÄISCHE PATENTSCHRIFT

(11) **EP 3 945 064 B1**
(45) Veröffentlichungstag und Bekanntmachung des Hinweises auf die Patenterteilung: **03.04.2024**
(21) Anmeldenummer: 21186334.5
(22) Anmeldetag: 19.07.2021
(51) Int. Cl.: B66C 15/06, B66C 23/88

(54) **SYSTEM ZUR ÜBERWACHUNG VON WINDEINFLÜSSEN AUF EIN ARBEITSGERÄT**
SYSTEM FOR MONITORING THE IMPACT OF WIND ON A WORKING DEVICE
SYSTÈME DE SURVEILLANCE DES INFLUENCES DU VENT SUR UN APPAREIL DE TRAVAIL

(30) Priorität: 29.07.2020 DE 102020119969
(43) Veröffentlichungstag der Anmeldung: 02.02.2022
(73) Patentinhaber: Liebherr-Werk Nenzing GmbH, 6710 Nenzing (AT)
(72) Erfinder: MIETSCHNIG, Walter, 6708 Brand (AT); JUSSEL, Patrick, 6713 Ludesch (AT)
(74) Vertreter: Laufhütte, Dieter

(56) Entgegenhaltungen:
- EP-A2- 1 221 426
- CN-A- 110 255 381
- US-A1- 2015 375 971
- US-A1- 2017 107 090

## Beschreibung

Die vorliegende Erfindung betrifft ein System zur Überwachung von Windeinflüssen auf ein Arbeitsgerät mit einer Erfassungseinheit, einer Aufzeichnungseinheit, einer Steuerung, einer externen Rechnereinheit und einem Ausgabegerät.

Viele Arbeitsgeräte wie z.B. fahrbare Krane bzw. Mobilkrane und im speziellen Raupenkrane sind im und außer Betrieb erheblichen Windeinflüssen ausgesetzt, die bei Überschreiten der maximal zulässigen Windgeschwindigkeiten zum Verlust der Standsicherheit des Arbeitsgeräts oder zum Maschinenbruch führen können. Der Einfluss von Wind und dessen Überwachung sind daher von überaus großer Relevanz für die Sicherheit und stellen, insbesondere, wenn sich das Arbeitsgerät außer Betrieb befindet, eine große Gefahrenquelle dar.

Bei Mobilkranen sind typischerweise in den entsprechenden technischen Dokumentationen (Betriebsanleitungen, Traglasttabellen etc.) die jeweils maximal zulässigen Windgeschwindigkeiten für die Modi "Kran in Betrieb" und "Kran außer Betrieb" definiert. Im Betrieb erfolgt üblicherweise eine Echtzeitüberwachung der aktuell am Kran angreifenden Windgeschwindigkeiten (d.h. Messung der aktuellen Windgeschwindigkeiten und Warnung bei Überschreitung eines zulässigen Werts). Außer Betrieb ist das Arbeitsgerät jedoch normalerweise abgeschaltet und unüberwacht. Der Kranbetreiber muss daher die maximal zulässige Windgeschwindigkeit, die zumeist auch von der Krankonfiguration (insbesondere von den verwendeten Auslegerlängen) und von der geometrischen Kranstellung (Kran aufgerichtet, Kran abgelegt, Kran teilabgelegt bzw. Klappmesserstellung) abhängt, der technischen Dokumentation entnehmen, diese mit einer für den Kranstandort relevanten Wetterprognose vergleichen und demensprechend Maßnahmen ergreifen. Da die Wetterbedingungen, insbesondere die zu erwartenden Wind- sowie Böengeschwindigkeiten, praktisch nicht immer vollständig bzw. genau lokal vorausgesagt werden können, kommt es immer wieder zu Kranunfällen aufgrund eines Überschreitens der für die Krankonfiguration außer Betrieb gültigen maximal zulässigen Windgeschwindigkeiten.

Aus der CN 110255381 A ist ein System zur Überwachung von Windeinflüssen für einen Turmkran mit den Merkmalen des Oberbegriffs des Anspruchs 1 bekannt. Ein ähnliches System ist auch schon in der US 2017/107090 A1 beschrieben.

Der vorliegenden Erfindung liegt daher die Aufgabe zugrunde, ein Überwachungssystem für ein Arbeitsgerät zur Verfügung zu stellen, welches eine ausreichende Sicherheit in Bezug auf Windeinflüsse sowohl im Betrieb als auch außerhalb des Betriebs gewährleistet.

Erfindungsgemäß wird diese Aufgabe durch ein Überwachungssystem mit den Merkmalen des Anspruchs 1 gelöst. Demnach wird ein System zur Überwachung von Windeinflüssen auf ein Arbeitsgerät, insbesondere einen Mobil- oder Raupenkran, vorgeschlagen, welches folgendes umfasst:
- mindestens eine an dem Arbeitsgerät angeordnete Erfassungseinheit, mittels welcher eine aktuelle Windgeschwindigkeit erfassbar ist,
- eine Aufzeichnungseinheit, welche eingerichtet ist, Daten der mindestens einen Erfassungseinheit während des und außerhalb des Betriebs des Arbeitsgeräts zu empfangen, zu speichern und zu übertragen,
- eine Steuerung des Arbeitsgeräts, welche eingerichtet ist, einen aktuellen Arbeitsgerätzustand zu ermitteln,
- eine externe Rechnereinheit, welche eingerichtet ist, Daten von der Erfassungseinheit betreffend die aktuelle Windgeschwindigkeit sowie Daten von der Steuerung direkt oder indirekt und insbesondere drahtlos zu empfangen und zu verarbeiten, und
- ein Ausgabegerät, welches eingerichtet ist, Daten von der externen Rechnereinheit insbesondere drahtlos zu empfangen.

Gemäß der Erfindung ist es vorgesehen, dass die externe Rechnereinheit eingerichtet ist, die von der Aufzeichnungseinheit empfangenen Daten betreffend die aktuelle Windgeschwindigkeit und die von der Steuerung empfangenen Daten betreffend den Grenzwert miteinander zu vergleichen, wobei die externe Rechnereinheit ferner eingerichtet ist, in einem Zeitraum, in dem das Arbeitsgerät außer Betrieb ist und daher keine Übermittlung von Daten erfolgt, einen zuletzt im Betrieb von der Steuerung empfangenen Grenzwert für den Vergleich heranzuziehen.

In einer weiteren Ausführungsform ist vorgesehen, dass die externe Rechnereinheit eingerichtet ist, anhand der Übertragung der Daten von der Steuerung, insbesondere anhand von Übertragungsintervallen, festzustellen, dass das Arbeitsgerät außer Betrieb ist, und weiterhin Daten von der Aufzeichnungseinheit betreffend eine aktuelle Windgeschwindigkeit zu empfangen. Die Daten von der Steuerung werden in bestimmten und vorzugsweise festlegbaren Zeitabständen bzw. Intervallen übertragen. Erfolgt keine Übertragung mehr aufgrund eines Übergangs des Arbeitsgeräts in die Stellung "außer Betrieb", so wird dies durch die externe Rechnereinheit registriert und dadurch erkannt, dass das Arbeitsgerät abgeschaltet ist. Die Übertragung der durch die Aufzeichnungseinheit geloggten Daten betreffend die aktuellen Windverhältnisse werden dagegen weiterhin und insbesondere ebenfalls in einstellbaren Intervallen, welche synchron oder asynchron zu den Übertragungsintervallen der Steuerung sein können, an die externe Rechnereinheit übertragen.

Die Steuerung und/oder die externe Rechnereinheit ist/sind erfindungsgemäß eingerichtet, abhängig von dem aktuellen Arbeitsgerätzustand einen Grenzwert für eine Windgeschwindigkeit zu ermitteln, beispielsweise zu berechnen oder einzulesen. D.h. es kann vorgesehen sein, dass die Steuerung Daten erhält, aus denen sie vor Ort den Grenzwert berechnet und diesen an die externe Rechnereinheit übermittelt. Alternativ oder zusätzlich kann vorgesehen sein, dass die Steuerung lediglich die zur Berechnung bzw. Ermittlung des Grenzwerts notwendigen Daten erhält und weiter an die externe Rechnereinheit überträgt, wo dann die Berechnung des Grenzwerts erfolgt. Die Ermittlung eines aktuellen Arbeitsgerätzustands umfasst vorzugsweise die Verarbeitung von Sensordaten.

Das Ausgabegerät ist erfindungsgemäß eingerichtet, bei einem Erreichen und/oder Überschreiten und/oder drohenden Erreichen des Grenzwerts durch die aktuelle Windgeschwindigkeit eine Warnung auszugeben.

Das erfindungsgemäße Überwachungssystem ermöglicht eine permanente, d.h. rund um die Uhr erfolgende Überwachung der Windeinflüsse auf das Arbeitsgerät, unabhängig davon, ob es in Betrieb bzw. eingeschaltet ist oder nicht. Durch das Vorsehen einer Aufzeichnungseinheit, die in der Lage ist, auch außerhalb des Betriebs des Arbeitsgeräts Winddaten von der mindestens einen Erfassungseinheit zu empfangen und zu speichern bzw. zu loggen, können diese Winddaten durchgängig aufgezeichnet und der externen Rechnereinheit zur Verfügung gestellt werden. Diese analysiert bzw. verarbeitet die durchgängig aufgezeichneten Winddaten und vergleicht sie mit von der Steuerung des Arbeitsgeräts zur Verfügung gestellten Grenzwerten für die aktuelle Krankonfiguration und anderen Parametern wie z.B. Position und aktuelle Stellung bzw. Arbeitsgerätzustand.

Die Grenzwerte müssen dabei von der Steuerung nicht wie bei den durch die Erfassungseinheit gemessenen aktuellen Windgeschwindigkeiten rund um die Uhr, d.h. auch außerhalb des Betriebs zur Verfügung gestellt werden. Befindet sich das Arbeitsgerät außer Betrieb und übermittelt die Steuerung daher keine aktuellen Daten mehr an die externe Rechnereinheit, so kann die externe Rechnereinheit auf die letzten während des Betriebs übermittelten Grenzwerte zurückgreifen, da sich die Stellung und Position des Arbeitsgeräts nach Deaktivierung nicht verändert. Durch die permanente Speicherung bzw. Bereitstellung aktueller Winddaten durch die Aufzeichnungseinheit können diese Werte rund um die Uhr mit den zur Verfügung stehenden Grenzwerten verglichen und ggf. eine Warnung an den Betreiber des Arbeitsgeräts durch das Ausgabegerät abgegeben werden.

Dadurch wird eine signifikante Steigerung der Sicherheit erreicht. Bei einem drohenden Überschreiten / Erreichen der festgelegten Grenzwerte durch die aktuellen Windverhältnisse kann auch außer Betrieb eine rechtzeitige Warnung des Betreibers erfolgen und entsprechende Maßnahmen ergriffen werden.

Dass die externe Rechnereinheit eingerichtet ist, Daten von der Erfassungseinheit betreffend die aktuelle Windgeschwindigkeit direkt oder indirekt zu empfangen schließt die Fälle mit ein, dass die Erfassungseinheit eine eigene Übermittlungseinheit aufweist und die Windgeschwindigkeitsdaten direkt an die externe Rechnereinheit überträgt oder aber dass die Auszeichnungseinheit die Windgeschwindigkeitsdaten an die externe Rechnereinheit überträgt. Ebenfalls können beide Optionen gleichzeitig implementiert sein.

Vorteilhafte Ausführungsformen der Erfindung ergeben sich aus den Unteransprüchen und der nachfolgenden Beschreibung.

Bei der externen Rechnereinheit kann es sich um einen Server, ein Rechnernetzwerk oder eine Cloud handeln. Diese ist insbesondere mit einer Übermittlungseinheit verbunden, welche in der Lage ist, Signale bzw. Daten vom Arbeitsgerät zu empfangen und Daten an das Ausgabegerät zu übermitteln. Dies erfolgt vorzugsweise drahtlos. Bei dem Ausgabegerät kann es sich um einen PC / Notebook, einen Tablet-PC, ein Smartphone oder eine Anzeige in der Fahrerkabine des Arbeitsgeräts handeln. Die Warnung wird vorzugsweise drahtlos an das Ausgabegerät übermittelt, beispielsweise per SMS, E-Mail, Push-Benachrichtigung, als Benachrichtigung bzw. Anzeige in einer App oder dergleichen. Die Warnung kann optisch und/oder akustisch erfolgen. Es kann ferner vorgesehen sein, dass mittels der mindestens einen Erfassungseinheit eine aktuelle Windrichtung erfassbar ist oder dass mindestens eine eigens zur Messung der Windrichtung eingerichtete Erfassungseinheit vorgesehen ist.

Vorzugsweise sind mehrere Erfassungseinheiten vorgesehen, welche die aktuelle Windgeschwindigkeit sowie ggf. die Windrichtung und/oder andere windbezogene Parameter an unterschiedlichen Positionen des Arbeitsgeräts erfassen und die Daten an die Aufzeichnungseinheit übermitteln. Beispielsweise kann es sich bei dem Arbeitsgerät um einen fahrbaren Kran mit Ausleger und Nadelausleger handeln, wobei sowohl am Ausleger als auch an Nadelausleger jeweils mindestens eine Erfassungseinheit angeordnet sind. Durch eine größere Anzahl von über das Arbeitsgerät verteilten Erfassungseinheiten kann dem Umstand besser Rechnung getragen werden, dass unterschiedliche Komponenten / Stellen des Arbeitsgeräts dem Wind einen unterschiedlich großen Widerstand entgegensetzen und dass Windgeschwindigkeit und -richtung an unterschiedlichen Stellen des Arbeitsgeräts voneinander abweichen können.

In einer Ausführungsform ist eine Energiequelle vorgesehen, mittels welcher die Aufzeichnungseinheit auch bei einem außer Betrieb befindlichen Arbeitsgerät mit Energie versorgbar ist, und welche vorzugsweise am Arbeitsgerät angeordnet ist. Durch die Energiequelle ist sichergestellt, dass eine Aufzeichnung der durch die Erfassungseinheit gelieferten Werte rund um die Uhr und unabhängig von der im Betrieb des Arbeitsgeräts bereitgestellten Energieversorgung erfolgen kann. Alternativ kann die Aufzeichnungseinheit außerhalb des Arbeitsgeräts abgeordnet sein und die Signale der mindestens einen Erfassungseinheit drahtlos empfangen. Ferner kann vorgesehen sein, dass die mindestens eine Erfassungseinheit durch dieselbe Energiequelle mit Energie / Strom versorgt wird.

Vorzugsweise umfasst die Energiequelle eine Batterie / Akku des Arbeitsgeräts, beispielsweise eine Kranbatterie, eine eigens der Aufzeichnungseinheit zugewiesene Batterie / Akku und/oder einen Energiewandler, insbesondere Solarzelle.

In einer weiteren Ausführungsform ist vorgesehen, dass das Ausgabegerät eingerichtet ist, Daten betreffend eine aktuelle Windgeschwindigkeit und/oder den Grenzwert und/oder eine Wetterprognose und/oder einen aktuellen Arbeitsgerätezustand und/oder die aktuelle Konfiguration des Arbeitsgeräts darzustellen, insbesondere grafisch darzustellen bzw. zu visualisieren. Dadurch können dem Bediener des Arbeitsgeräts während des Betriebs nützliche Daten bzw. Ist- und/oder SollWerte angezeigt werden. Diese Daten werden dem Ausgabegerät insbesondere über die externe Rechnereinheit zur Verfügung gestellt.

In einer weiteren Ausführungsform ist vorgesehen, dass die externe Rechnereinheit ferner eingerichtet ist, Daten von der Steuerung betreffend eine aktuelle Position des Arbeitsgeräts und/oder einen aktuellen Arbeitsgerätzustand und/oder die aktuelle Konfiguration des Arbeitsgeräts und/oder Traglastwerte bzw. Traglasttabellendaten des Arbeitsgeräts und/oder Grenzwerte für Windgeschwindigkeiten in Abhängigkeit des Arbeitsgerätzustands zu empfangen. Alternativ oder zusätzlich kann die externe Rechnereinheit eingerichtet sein, Daten von einem externen Dienst / Service betreffend eine Wetterprognose zu empfangen. Die Wetterprognose betrifft insbesondere den Aufenthaltsort des Arbeitsgeräts und deckt mindestens den Zeitraum ab, in dem das Arbeitsgerät außer Betrieb ist.

Als Arbeitsgerätzustand wird insbesondere die Ausrichtung bzw. Stellung des Arbeitsgeräts und der verschiedenen Komponenten (z.B. die Winkelstellung eines Auslegers) verstanden. So kann das Arbeitsgerät, wenn die räumlichen Verhältnisse am Einsatzort dies zulassen, in eine Stellung "außer Betrieb" gebracht werden, in der beispielsweise ein Ausleger des Arbeitsgeräts auf dem Boden abgelegt / abgestützt wird. Jede Stellung bzw. jeder Arbeitsgerätzustand bietet somit eine andere Angriffsfläche für Wind und ist somit für die Ermittlung der entsprechenden Grenzwerte zu berücksichtigen. Mögliche Stellungen bzw. Zustände können beispielsweise bei einem fahrbaren Kran mit Ausleger eine Arbeitsposition (Stellung des Auslegers innerhalb oder außerhalb eines Traglastkurvenbereichs), eine Parkposition (z.B. Ausleger ist aufgerichtet oder Ausleger ist vollständig auf dem Boden abgelegt) oder eine Klappmesserposition (Ausleger ist teilweise auf dem Boden abgelegt bzw. stützt sich mit dessen Spitze auf dem Boden ab) sein.

Als Arbeitsgerätkonfiguration wird dagegen insbesondere die Ausstattung bzw. der Rüstzustand des Arbeitsgeräts (z.B. bei einem fahrbaren Kran als Arbeitsgerät: Aufbau des Krans, d.h. Konfiguration des Auslegers (Hauptausleger mit oder ohne Nadelausleger / Klappspitze etc.), Länge der Auslegerteilstücke, Verwendung eines Derrickauslegers, Ballastierung, Höhe bzw. Position der mindestens einen Erfassungseinheit, usw.) verstanden, d.h. die geometrischen Verhältnisse, Anordnung etc. der verschiedenen Komponenten. Die Konfiguration wird üblicherweise während des Einsatzes nicht verändert und kann in einer Datenbank bzw. einem Speicher des Arbeitsgeräts hinterlegt sein.

Die von der Steuerung berechneten oder aus einer Datenbank eingelesenen Grenzwerte für Windgeschwindigkeiten gelten insbesondere für den jeweiligen Zustand (Arbeitsposition, Parkposition, Klappmesserposition etc. sowie genaue Stellung des Auslegers und/oder anderer Komponenten) und die jeweilige Konfiguration des Arbeitsgeräts.

In einer weiteren Ausführungsform ist vorgesehen, dass am Arbeitsgerät mindestens ein Sensor vorgesehen ist, mittels welchem ein Parameter des aktuellen Arbeitsgerätzustands erfassbar ist, wobei die Steuerung eingerichtet ist, Daten von dem mindestens einen Sensor, beispielsweise über die Steuerung, zu empfangen. Die Sensoren erfassen in Gesamtheit insbesondere den aktuellen Zustand und ggf. auch die aktuelle Konfiguration des Arbeitsgeräts. Aus den Sensordaten können die für die aktuelle Konfiguration bzw. den Zustand des Arbeitsgeräts geltenden Grenzwerte für die Windgeschwindigkeit(en) berechnet werden. Dies kann lokal auf dem Arbeitsgerät durch die Steuerung geschehen oder auch durch die externe Rechnereinheit, nachdem die entsprechenden Daten durch die Steuerung übermittelt wurden.

In einer weiteren Ausführungsform ist vorgesehen, dass am Arbeitsgerät mindestens eine Übermittlungseinheit bzw. Telematikeinheit vorgesehen ist, welche eingerichtet ist, Daten von der Steuerung und/oder der Aufzeichnungseinheit drahtlos an die externe Rechnereinheit zu übermitteln. Vorzugsweise sind je eine Übermittlungseinheit für die Daten der Aufzeichnungseinheit und eine Übermittlungseinheit für die Daten der Steuerung vorgesehen, die unabhängig voneinander an die externe Rechnereinheit übermitteln. Die der Steuerung zugeordnete Übermittlungseinheit sendet insbesondere nur dann Daten an die externe Rechnereinheit, wenn sich das Arbeitsgerät im laufendem Betrieb befindet (d.h. Steuerung und Motor sind eingeschaltet). Dagegen sendet die der Aufzeichnungseinheit zugeordnete Übermittlungseinheit auch außerhalb des Betriebs bzw. bei deaktiviertem Arbeitsgerät Daten an die externe Rechnereinheit, insbesondere in einstellbaren Intervallen. Dies kann beispielsweise per GSM oder auch mit einer anderen drahtlosen Technologie erfolgen. Die der Aufzeichnungseinheit zugeordnete Übermittlungseinheit kann Teil der Aufzeichnungseinheit sein.

In einer weiteren Ausführungsform ist vorgesehen, dass die Steuerung eingerichtet ist, die Daten von der mindestens einen Erfassungseinheit zu empfangen und vorzugsweise Daten betreffend die aktuelle Windgeschwindigkeit und/oder den Grenzwert auf einer Anzeigeeinheit des Arbeitsgeräts darzustellen. Im laufenden Betrieb des Arbeitsgeräts erfolgt also nicht nur eine Übermittlung von Daten der Steuerung an die externe Rechnereinheit, sondern es werden auch Informationen dem Bediener des Arbeitsgeräts direkt und in Echtzeit angezeigt. Die Steuerung empfängt dabei vorteilhafterweise auch Daten von der mindestens einen Erfassungseinheit und/oder der Aufzeichnungseinheit betreffend die aktuelle Windsituation wie z.B. eine aktuelle Windgeschwindigkeit. Dadurch kann neben einer Überwachung der Windsituation am außer Betrieb befindlichen Arbeitsgerät durch die externe Rechnereinheit auch eine Überwachung im laufenden Betrieb durch die Steuerung und eine entsprechende Anzeige der Werte und/oder eine Warnung bei Erreichen oder drohendem Erreichen von Grenzwerten an den Bediener erfolgen.

In einer weiteren Ausführungsform ist vorgesehen, dass in der Steuerung oder einem von der Steuerung auslesbaren Speicher (bzw. einer Datenbank) Daten betreffend die aktuelle Konfiguration des Arbeitsgeräts und/oder Traglastwerte und/oder Grenzwerte für Windgeschwindigkeiten in Abhängigkeit des Arbeitsgerätzustands und/oder der Arbeitsgerätkonfiguration hinterlegt sind. Diese Daten können ganz oder teilweise an die externe Rechnereinheit übermittelt und/oder direkt durch die Steuerung lokal verarbeitet und ausgewertet werden.

In einer weiteren Ausführungsform ist vorgesehen, dass eine am Arbeitsgerät angeordnete Positionserfassungseinheit, insbesondere ein GPS-Modul, zur Erfassung der aktuellen Position des Arbeitsgeräts vorgesehen ist, wobei die Steuerung eingerichtet ist, positionsbezogene Daten von der Positionserfassungseinheit zu empfangen. Die Positionsdaten können von der Steuerung lokal verarbeitet und/oder an die externe Rechnereinheit übermittelt werden. Die externe Rechnereinheit kann anhand der erfassten aktuellen Position des Arbeitsgeräts beispielsweise eine ortsspezifische Wetterprognose in die Überwachung einbeziehen.

In einer weiteren Ausführungsform ist vorgesehen, dass die mindestens eine Erfassungseinheit ein Anemometer, insbesondere Schalenanemometer, ist und vorzugsweise an einem Ausleger des Arbeitsgeräts angeordnet ist.

In einer weiteren Ausführungsform ist vorgesehen, dass die mindestens eine Erfassungseinheit ohne Energieversorgung funktioniert und ein Signalerzeugungsmittel zur Erzeugung eines Signals, insbesondere einen Reedschalter, aufweist, wobei die Aufzeichnungseinheit eingerichtet ist, dieses Signal zu empfangen. Beispielsweise kann die Erfassungseinheit als Schalenanemometer ausgebildet sein, welches einen oder mehrere Reedkontakte schaltet. Hierfür ist lediglich ein Magnetfeld, beispielsweise generiert durch einen oder mehrere am Schalenanemometer oder einem von diesem bewegten Bauteil angeordnete Magneten (insbesondere Permanentmagneten), erforderlich, welches bei Annäherung (hier: windbedingte Rotation) an den Reedkontakt diesen schaltet und einen Stromfluss ermöglicht. In diesem Fall muss die Erfassungseinheit keine eigene Energiequelle aufweisen, während die Spannung / Energie für den Reedkontakt / Reedschalter vorzugsweise durch die Energiequelle der Aufzeichnungseinheit bereitgestellt wird.

Die Erfassungseinheit kann über zwei insbesondere digitale Ausgänge verfügen, einen Ausgang für die Steuerung zur Überwachung und/oder Darstellung der aktuellen Windgeschwindigkeit(en) für den Betreiber des Arbeitsgeräts und einen Ausgang für die Aufzeichnungseinheit zur durchgehend erfolgenden Registierung / Aufzeichnung der aktuellen Windgeschwindigkeit(en). Bei der Aufzeichnungseinheit kann es sich um ein Niederenergie-Gerät, beispielsweise einen Niederenergie-Datenlogger handeln, welches die erfassten Windgeschwindigkeitsdaten mit minimaler Leistungsaufnahme rund um die Uhr erhalten und speichern / aufzeichnen kann. Bei der Steuerung kann es sich um eine Steuereinheit, z.B. eine Kransteuerung, handeln, mittels welcher verschiedene Komponenten des Arbeitsgeräts bzw. das Arbeitsgerät als solches steuerbar sind / ist.

Weitere Merkmale, Einzelheiten und Vorteile der Erfindung ergeben sich aus den nachfolgend anhand der Figuren erläuterten Ausführungsbeispielen. Es zeigen:
- Figur 1:: eine Seitenansicht eines Raupenkrans mit Komponenten des erfindungsgemäßen Systems gemäß einem Ausführungsbeispiel;
- Figur 2:: eine schematische Darstellung der Komponenten des erfindungsgemäβen Systems und ihrer Verbindungen gemäß einem ersten Ausführungsbeispiel;
- Figur 3:: eine schematische Darstellung der Komponenten des erfindungsgemäβen Systems und ihrer Verbindungen gemäß einem zweiten Ausführungsbeispiel; und
- Figur 4:: eine schematische Darstellung der Erfassungseinheit und ihrer Verbindungen mit anderen Komponenten des erfindungsgemäßen Systems gemäß einem Ausführungsbeispiel.

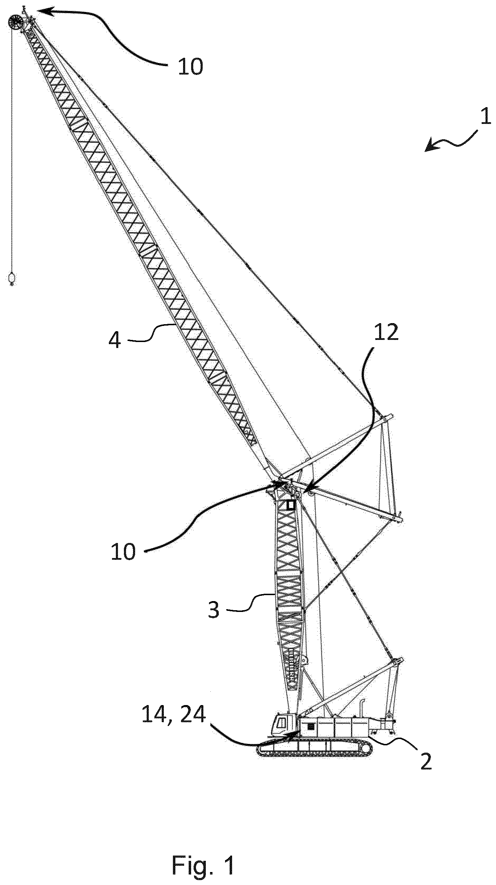

In der Figur 1 ist ein Raupenkran 1 als Beispiel eines Arbeitsgeräts mit Komponenten des erfindungsgemäßen Überwachungssystems in einer Seitenansicht dargestellt. Das Arbeitsgerät kann aber auch ein beliebiges anderes Arbeitsgerät sein, welches Windeinflüssen ausgesetzt ist und eine entsprechende Überwachung erfordert.

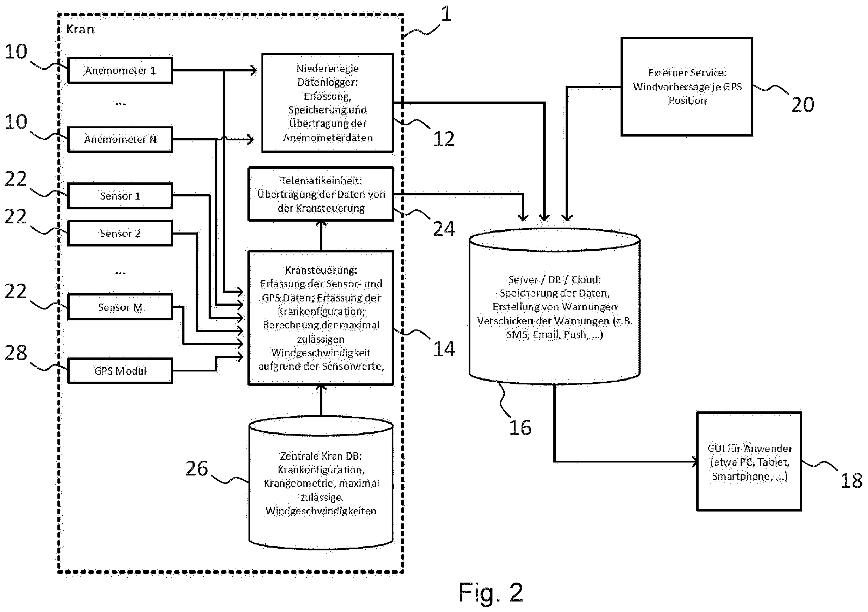

Ein erstes Ausführungsbeispiel des erfindungsgemäßen Systems ist schematisch in der Figur 2 dargestellt.

Der Kran 1 weist einen auf einem Unterwagen drehbar gelagerten Oberwagen 2 mit einem daran schwenkbar angelenkten Ausleger 3 und einem daran montierten Nadelausleger 4 auf. Sowohl der Ausleger 3 als auch der Nadelausleger 4 bieten Wind eine große Angriffsfläche, sodass eine Überwachung der aktuellen Windverhältnisse notwendig ist, um einen Unfall bzw. Umkippen zu verhindern. Zu diesem Zweck weist der Kran 1 an der Spitze des Auslegers 3 und an der Spitze des Nadelauslegers 4 jeweils eine als drehbar gelagertes Schalenanemometer ausgeführte Erfassungseinheit 10 auf.

Eine Kransteuerung 14 empfängt die Daten der Anemometer 10 (Windsensoren), die die aktuelle Windstärke an entsprechenden Positionen betreffen, und verarbeitet diese zum Zwecke einer Windüberwachung. Hierfür hat die Steuerung 14 Zugriff auf eine Datenbank 26 des Krans 1, in der u.a. Informationen hinsichtlich der aktuellen Krankonfiguration sowie weitere Daten wie z.B. Traglastwerte oder Grenzwerte für Windgeschwindigkeiten in Abhängigkeit des Kranzustands und/oder der Krankonfiguration hinterlegt sind. Der aktuelle Kranzustand (Auslegerwinkel, Nadelauslegerwinkel etc.) wird durch eine Reihe von Sensoren 22 (nicht gezeigt) erfasst und der Steuerung 14 zur Verfügung gestellt. Aus diesen Informationen berechnet die Steuerung 14 Grenzwerte für die maximal zulässigen Windgeschwindigkeiten an den Positionen der Anemometer 10 oder liest entsprechende Werte aus einem Speicher aus.

Die Grenzwerte werden, ggf. zusammen mit den durch die Anemometer 10 gelieferten Winddaten und ggf. zusammen mit durch ein GPS-Modul 28 bereitgestellte Positionsdaten des Krans 1, mittels einer Übermittlungseinheit bzw. Telematik 24 an eine externe Rechnereinheit 16, beispielsweise eine Cloud, übermittelt. Diese kann weitere Informationen wie beispielsweise Wetterprognosedaten eines externen Anbieters 20 einbeziehen und die zur Verfügung stehenden Daten analysieren. Bei einer drohenden Überschreitung oder einem Erreichen der Grenzwerte durch die gemessene aktuelle Windgeschwindigkeit kann eine Warnung über ein Ausgabegerät 18, beispielsweise eine Bedieneranzeige in einer Fahrerkabine des Krans 1, ein Smartphone, PC, Tablet oder dergleichen, ausgegeben werden, um den Bediener zu warnen. Dieser kann dann geeignete Maßnahmen wie z.B. ein Ablegen der Ausleger 3, 4 auf dem Boden einleiten.

Allerdings erfolgt eine Übermittlung der Daten von der Steuerung 14 an die externe Rechnereinheit 16 nur im laufenden Betrieb des Krans 1, wenn die Steuerung 14 und der Motor aktiviert sind. Bei gattungsgemäßen Geräten musste man sich daher beim Positionieren des Krans in einer Stellung "außer Betrieb" auf die zu diesem Zeitpunkt geltenden Wetterprognosedaten verlassen und hatte keine Möglichkeit, die Windverhältnisse auch außerhalb des Betriebs zu überwachen und ggf. geeignete Maßnahmen zu ergreifen. Dies stellte ein erhebliches Sicherheitsrisiko dar und führte immer wieder zu Unfällen.

Um dieses Problem zu lösen, ist erfindungsgemäß eine Aufzeichnungseinheit 12 am Kran 1 vorgesehen, bei der es sich im vorliegenden Ausführungsbeispiel um einen Niederenergie-Datenlogger handelt. Der Datenlogger 12 empfängt ebenfalls die Daten der Anemometer 10 und legt diese in einem Speicher ab. Der Datenlogger 12 weist eine eigene Energiequelle, beispielsweise die Kranbatterie oder eine eigens zugewiesene Batterie, ggf. auch eine Solarzelle oder dergleichen, auf, um auch außerhalb des Betriebs des Arbeitsgeräts 1 kontinuierlich funktionsfähig zu sein und Winddaten aufzeichnen zu können. Dem Datenlogger 12 ist eine eigene Übermittlungseinheit bzw. Telematik 24 (beispielsweise ein eigenes Modem) zugeordnet, um unabhängig vom Betriebsstatus des Arbeitsgeräts 1 bzw. der Steuerung 14 die aufgezeichneten aktuellen Winddaten der Anemometer 10 an die externe Rechnereinheit 16 übermitteln zu können. Die Übertragung der Daten erfolgt dabei in festlegbaren Zeitintervallen.

Somit ist eine Überwachung der Windverhältnisse durch die externe Rechnereinheit 16 zu jeder Zeit möglich, auch wenn der Kran 1 abgeschaltet ist. Für den Vergleich mit den aktuellen Winddaten werden die zuletzt vor Abschalten des Krans 1 durch die Steuerung 14 zur Verfügung gestellten Grenzwerte herangezogen. Eine Warnung kann über das Ausgabegerät 18 also auch bei deaktiviertem Kran 1 ausgegeben werden, wenn die durch den Datenlogger 12 gelieferten aktuellen Windgeschwindigkeiten einen Grenzwert überschreiten oder zu überschreiten drohen.

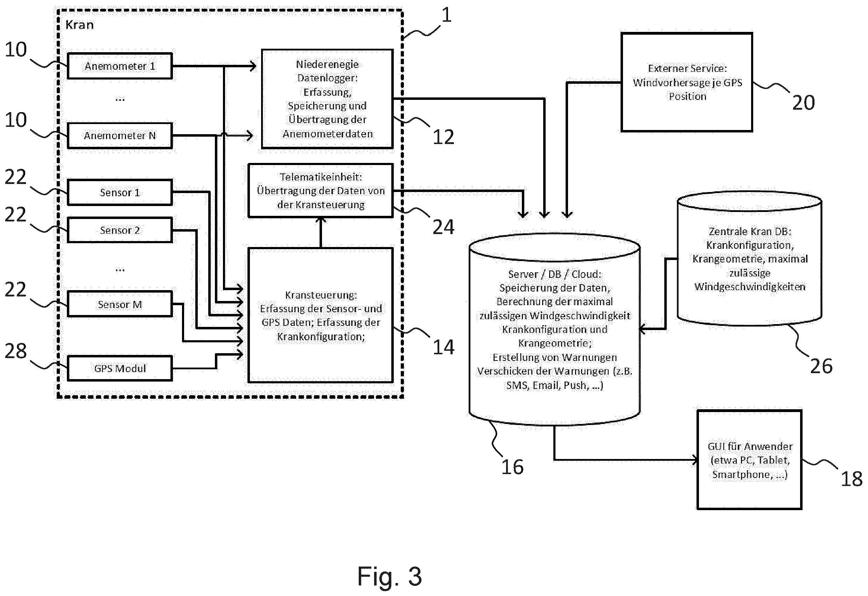

Ein zweites Ausführungsbeispiel des erfindungsgemäßen Systems ist schematisch in der Figur 3 dargestellt. Im Unterschied zum System gemäß Figur 2 erfolgt hier die Berechnung der Grenzwerte für die maximal zulässigen Windgeschwindigkeiten nicht lokal durch die Steuerung 14, sondern durch die externe Rechnereinheit 16. Dabei übermittelt die Steuerung 14 die Daten der Sensoren 22 sowie des GPS-Moduls 28 über die Telematik 24 des Krans 1 an die externe Rechnereinheit 16, welche zudem Zugriff auf die zentrale Datenbank 26 mit Informationen hinsichtlich der aktuellen Krankonfiguration hat. Diese ist in diesem Ausführungsbeispiel nicht lokal am Kran 1 angeordnet.

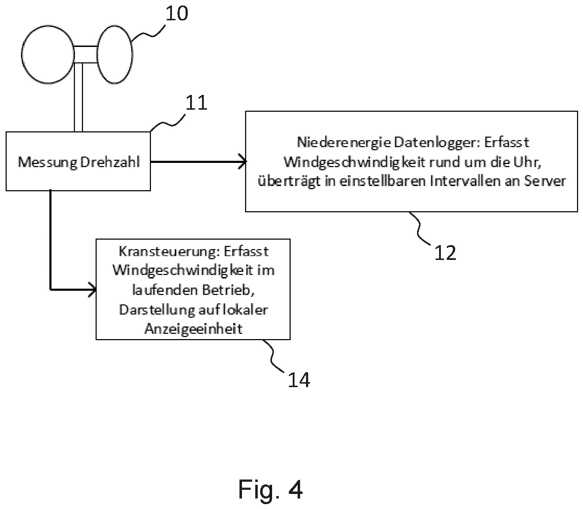

In der Figur 4 ist schematisch eines der Anemometer 10, eine mit diesem verbundene Messeinrichtung 11 und die Datenverbindungen zum Datenlogger 12 und zur Steuerung 14 gemäß einem Ausführungsbeispiel dargestellt. Das Anemometer 10 selbst benötigt keine eigene Stromversorgung, sondern schaltet bei der windbedingten Rotation einen oder mehrere Reedkontakte, wodurch Signale (z.B. Spannungspulse), die die aktuelle Windgeschwindigkeit repräsentieren (insbesondere eine Umlaufzahl pro Zeiteinheit bzw. Drehzahl) erzeugt und an den Datenlogger 12 übermittelt werden. Selbstverständlich können andere oder eine Kombination unterschiedlicher Erfassungseinheiten bzw. Anemometer 10 zum Einsatz kommen, welche dem Datenlogger 12 Informationen betreffend eine oder mehrere (an verschiedenen Stellen) aktuell auftretende Windgeschwindigkeit zur Verfügung stellen.

Zusammengefasst umfasst das erfindungsgemäße System gemäß dem hier gezeigten Ausführungsbeispiel folgende Komponenten:
Mehrere Schalenanemometer 10, welche über einen (beispielsweise digitalen) Ausgang verfügen, über den die Steuerung 14 im laufenden Betrieb des Arbeitsgeräts 1 die Windgeschwindigkeit erfassen kann, um diese dem Bedienpersonal auf einer Bedieneranzeige in der Fahrerkabine darzustellen.

Einen Niederenergie-Datenlogger 12, der die Windgeschwindigkeit bei minimaler Leistungsaufnahme rund um die Uhr erfassen und in einstellbaren Intervallen an die externe Rechnereinheit 16 übermitteln kann. Dieser Niederenergie-Datenlogger 12 kann mittels der Schalenanemometer 10 etwa über zusätzliche Reedschalter die Windgeschwindigkeit erfassen. Durch solche Reedschalter ist keine zusätzliche Spannungsversorgung der Anemometer 10 notwendig. Der Wind treibt die Anemometer 10 an und die rotierenden Schalen schalten den Reedkontakt. Die Anemometer 10 verfügen also über zwei Ausgänge: je einen für die Steuerung 14 zur Darstellung und einen für den Niederenergie-Datenlogger 12 zur Erfassung der Windgeschwindigkeit rund um die Uhr (vgl. Figur 3).

Eine Steuerung 14, die abhängig von der Krankonfiguration (z.B. verwendete Auslegerlängen) und von der geometrischen Kranstellung (Kran 1 außer Betrieb: Kran 1 aufgerichtet in Parkposition, Kran 1 aufgerichtet außerhalb Parkposition, Kran 1 teilabgelegt = Klappmesserstellung, Kran 1 abgelegt; Kran 1 im Betrieb: Kran 1 innerhalb Traglastkurvenbereich, Kran 1 außerhalb Traglastkurvenbereich) die Grenzwerte (maximal zulässige Geschwindigkeit) berechnet. Die maximal zulässigen Windgeschwindigkeiten werden in regelmäßigen Intervallen mittels einer weiteren Telematikeinheit 24 an die externe Rechnereinheit 16 übertragen. Diese Übertragungen finden allerdings nur im laufenden Betrieb des Arbeitsgeräts 1 statt.

Einen dezentralen Server bzw. eine externe Rechnereinheit 16, die die vom Niederenergie-Datenlogger 12 erfassten Windgeschwindigkeiten mit den von der Steuerung 14 errechneten maximal zulässigen Windgeschwindigkeiten vergleicht und bei Gefahrensituationen Warnungen etwa über Email, SMS oder Push Notification auf einem Ausgabegerät 18 auslöst. Dieser dezentrale Server 16 kennt vom Kran 1 rund um die Uhr die erfasste Windgeschwindigkeit sowie die maximal zulässige Windgeschwindigkeit (bzw. die jeweiligen Geschwindigkeiten für die jeweiligen Anemometer 10) im Betrieb als auch die maximal zulässige Windgeschwindigkeit außer Betrieb. Der Server 16 stellt den Status des Krans 1 (außer Betrieb = ausgeschaltet oder in Betrieb = eingeschaltet) fest und vergleicht die erfasste Windgeschwindigkeit mit der entsprechenden letzten bekannten maximal zulässigen Windgeschwindigkeit. Durch zusätzliche bekannte Messwerte (etwa GPS-Position, Höhe des Auslegerkopfs über dem Boden etc.) können die Informationen z.B. durch zusätzliche Daten von entsprechenden meteorologischen Wetterdiensten 20 angereichert werden, um den Benutzer vor zukünftigen Wettersituationen zu warnen.

Wesentlich an der Erfindung ist die Verknüpfung der gemessenen Windgeschwindigkeiten mit den Grenzwerten des Arbeitsgeräts 1, die der Steuerung 14 bekannt sind, und die Übertragung der Daten auf einen externen Server / Cloud 16, an dem zum einen eine Speicherung der Daten (aktuelle Windgeschwindigkeit, Arbeitsgerätkonfiguration, Stellung bzw. Zustand und/oder Betriebsstatus des Arbeitsgeräts 1, zulässige Windgeschwindigkeit für gegebene Stellung und Konfiguration, Standort des Arbeitsgeräts 1, Windvorhersagen entsprechend meteorologischer Modelle etc.) erfolgt und zum anderen Warnungen in Echtzeit an den Betreiber des Arbeitsgeräts 1 bei Annäherung und/oder Überschreitung von Grenzwerten generiert werden können. Die Warnung kann z.B. über eine App mit Usermanagement erfolgen.

Auch außerhalb des Betriebs des Arbeitsgeräts 1 werden in einstellbaren zeitlichen Intervallen die Winddaten (z.B. der letzten Minuten) etwa über GSM oder eine andere Drahtlostechnologie an die externe Rechnereinheit 16 übertragen. Anemometer 10 und Niederenergie-Datenlogger 12 erfassen die Daten vollständig unabhängig vom restlichen Arbeitsgerät 1. Einzig eine Stromversorgung ist notwendig. Damit wird eine permanente Aufzeichnung und Übertragung der Daten ermöglicht.

Im laufenden Betrieb wird der Kran durch die Kransteuerung 14 angesteuert. Diese erfasst Daten verschiedener Sensoren 22 (sowie die Windgeschwindigkeiten der Anemometer 10), die in ihrer Gesamtheit die Krankonfiguration, Kranstellung, GPS-Position über ein entsprechendes Modul 28 usw. erfassen. Die Krankonfiguration ist dabei etwa: wie ist der Kran aufgebaut (Hauptausleger, Nadelausleger), wie lange sind die Auslegerteilstücke, in wie viel Meter Höhe befinden sich die jeweiligen Anemometer 10, usw. Aus diesen Daten werden lokal auf dem Arbeitsgerät 1 die maximal zulässigen Windgeschwindigkeiten bzw. Grenzwerte für die verschiedenen Kranstellungen berechnet: maximal zulässige Windgeschwindigkeit in Parkposition, in Klappmesserposition, in Arbeitsposition aber auch im ausgeschalteten Zustand. Diese Daten werden mittels einer Telematik (z.B. eines kraninternen Modems) 24 ebenfalls an den Server 16 übertragen. Die Daten werden in einstellbaren Intervallen übertragen, welche vergleichbar aber asynchron mit den Übertragungen des Datenloggers 12 bzw. dessen zugeordneter Übertragungseinheit 24 sind.

Auf der externen Rechnereinheit 16 werden nun die einlangenden Daten analysiert. Aufgrund der Übertragungsintervalle der Daten von der Kransteuerung 14 lässt sich feststellen, ob der Kran 1 eingeschaltet bzw. in Betrieb, oder ob er ausgeschaltet ist. Je nach Einschaltzustand des Krans 1 und der geometrischen Daten lässt sich nun eine maximal zulässige Windgeschwindigkeit bestimmen. Der direkte Vergleich der Winddaten aus dem Datenlogger 12 mit diesen maximal zulässigen Windgeschwindigkeiten gibt nun einen sehr raschen Hinweis auf die Windsituation beim Kran 1 sowie die aktuelle Windauslastung. Nähert sich nun etwa die aktuell gemessene Windgeschwindigkeit der maximal zulässigen Windgeschwindigkeit an, so kann einem Anwender eine entsprechende Warnung / Alarm mitgeteilt werden.

### Bezugszeichenliste:

- 1: Arbeitsgerät (Raupenkran)
- 2: Oberwagen
- 3: Ausleger
- 4: Nadelausleger
- 10: Erfassungseinheit (Anemometer)
- 11: Signalerzeugungsmittel
- 12: Aufzeichnungseinheit
- 14: Steuerung
- 16: Externe Rechnereinheit / Server / Cloud
- 18: Ausgabegerät
- 20: Externer Dienst
- 22: Sensor
- 24: Übermittlungseinheit / Telematik
- 26: Speicher/ Datenbank
- 28: Positionserfassungseinheit (GPS-Modul)

## Patentansprüche

1. System zur Überwachung von Windeinflüssen auf ein Arbeitsgerät (1), insbesondere einen Mobil- oder Raupenkran, umfassend:
- mindestens eine am Arbeitsgerät (1) angeordnete Erfassungseinheit (10), mittels welcher eine aktuelle Windgeschwindigkeit erfassbar ist,
- eine Aufzeichnungseinheit (12), welche eingerichtet ist, Daten der mindestens einen Erfassungseinheit (10) während des und außerhalb des Betriebs des Arbeitsgeräts (1) zu empfangen, zu speichern und zu übertragen,
- eine Steuerung (14) des Arbeitsgeräts (1), welche eingerichtet ist, einen aktuellen Arbeitsgerätzustand zu ermitteln,
- eine externe Rechnereinheit (16), welche eingerichtet ist, Daten von der Erfassungseinheit (10) betreffend die aktuelle Windgeschwindigkeit sowie Daten von der Steuerung (14) direkt oder indirekt und insbesondere drahtlos zu empfangen und zu verarbeiten, und
- ein Ausgabegerät (18), welches eingerichtet ist, Daten von der externen Rechnereinheit (16) insbesondere drahtlos zu empfangen,
- wobei die Steuerung (14) und/oder die externe Rechnereinheit (16) eingerichtet ist/sind, abhängig von dem aktuellen Arbeitsgerätzustand einen Grenzwert für eine Windgeschwindigkeit zu ermitteln und
- wobei das Ausgabegerät (18) eingerichtet ist, bei einem Erreichen und/oder Überschreiten und/oder drohenden Erreichen des Grenzwerts durch die aktuelle Windgeschwindigkeit eine Warnung auszugeben,
**dadurch gekennzeichnet,**
- **dass** die externe Rechnereinheit (16) eingerichtet ist, die von der Aufzeichnungseinheit (12) empfangenen Daten betreffend die aktuelle Windgeschwindigkeit und die von der Steuerung (14) empfangenen Daten betreffend den Grenzwert miteinander zu vergleichen, wobei die externe Rechnereinheit (16) ferner eingerichtet ist, in einem Zeitraum, in dem das Arbeitsgerät (1) außer Betrieb ist, einen zuletzt im Betrieb von der Steuerung (14) empfangenen Grenzwert für den Vergleich heranzuziehen.

2. System nach Anspruch 1, **dadurch gekennzeichnet, dass** eine Energiequelle vorgesehen ist, mittels welcher die Aufzeichnungseinheit auch bei einem außer Betrieb befindlichen Arbeitsgerät mit Energie versorgbar ist, und welche vorzugsweise am Arbeitsgerät angeordnet ist, wobei die Energiequelle vorzugsweise eine Batterie des Arbeitsgeräts (1), eine der Aufzeichnungseinheit (12) zugewiesene Batterie und/oder einen Energiewandler, insbesondere Solarzelle, umfasst.

3. System nach Anspruch 1 oder 2, **dadurch gekennzeichnet, dass** das Ausgabegerät (18) eingerichtet ist, Daten betreffend eine aktuelle Windgeschwindigkeit und/oder den Grenzwert und/oder eine Wetterprognose und/oder einen aktuellen Arbeitsgerätezustand und/oder die aktuelle Konfiguration des Arbeitsgeräts darzustellen, insbesondere grafisch darzustellen.

4. System nach einem der vorhergehenden Ansprüche, **dadurch gekennzeichnet, dass** die externe Rechnereinheit (16) eingerichtet ist, anhand der Übertragung der Daten von der Steuerung (14), insbesondere anhand von Übertragungsintervallen, festzustellen, dass das Arbeitsgerät (1) außer Betrieb ist, und weiterhin Daten von der Aufzeichnungseinheit (12) betreffend eine aktuelle Windgeschwindigkeit zu empfangen.

5. System nach einem der vorhergehenden Ansprüche, **dadurch gekennzeichnet, dass** die externe Rechnereinheit (16) eingerichtet ist, Daten von der Steuerung (14) betreffend eine aktuelle Position des Arbeitsgeräts (1) und/oder einen aktuellen Arbeitsgerätzustand und/oder die aktuelle Konfiguration des Arbeitsgeräts (1) und/oder Traglastwerte des Arbeitsgeräts (1) und/oder Grenzwerte für Windgeschwindigkeiten in Abhängigkeit des Arbeitsgerätzustands zu empfangen und/oder Daten von einem externen Dienst (20) betreffend eine Wetterprognose zu empfangen.

6. System nach einem der vorhergehenden Ansprüche, **dadurch gekennzeichnet, dass** am Arbeitsgerät (1) mindestens ein Sensor (22) vorgesehen ist, mittels welchem ein Parameter des aktuellen Arbeitsgerätzustands erfassbar ist, wobei die Steuerung (14) eingerichtet ist, Daten von dem mindestens einen Sensor (22) zu empfangen.

7. System nach einem der vorhergehenden Ansprüche, **dadurch gekennzeichnet, dass** am Arbeitsgerät (1) mindestens eine Übermittlungseinheit (24) vorgesehen ist, welche eingerichtet ist, Daten von der Steuerung (14) und/oder der Aufzeichnungseinheit (12) drahtlos an die externe Rechnereinheit (16) zu übermitteln.

8. System nach einem der vorhergehenden Ansprüche, **dadurch gekennzeichnet, dass** die Steuerung (14) eingerichtet ist, die Daten von der mindestens einen Erfassungseinheit (10) zu empfangen und vorzugsweise Daten betreffend die aktuelle Windgeschwindigkeit und/oder den Grenzwert auf einer Anzeigeeinheit des Arbeitsgeräts (1) darzustellen.

9. System nach einem der vorhergehenden Ansprüche, **dadurch gekennzeichnet, dass** in der Steuerung (14) oder in einem von der Steuerung und/oder von der externen Rechnereinheit (16) auslesbaren Speicher (26) Daten betreffend die aktuelle Konfiguration des Arbeitsgeräts (1) und/oder Traglastwerte und/oder Grenzwerte für Windgeschwindigkeiten in Abhängigkeit des Arbeitsgerätzustands und/oder der Konfiguration des Arbeitsgeräts hinterlegt sind.

10. System nach einem der vorhergehenden Ansprüche, **dadurch gekennzeichnet, dass** eine am Arbeitsgerät (1) angeordnete Positionserfassungseinheit (28), insbesondere GPS-Modul, zur Erfassung der aktuellen Position des Arbeitsgeräts (1) vorgesehen ist, wobei die Steuerung (14) eingerichtet ist, positionsbezogene Daten von der Positionserfassungseinheit (28) zu empfangen.

11. System nach einem der vorhergehenden Ansprüche, **dadurch gekennzeichnet, dass** die mindestens eine Erfassungseinheit (10) ein Anemometer, insbesondere Schalenanemometer, ist und vorzugsweise an einem Ausleger (3, 4) des Arbeitsgeräts (1) angeordnet ist.

12. System nach einem der vorhergehenden Ansprüche, **dadurch gekennzeichnet, dass** die mindestens eine Erfassungseinheit (10) ohne Energieversorgung funktioniert und ein Signalerzeugungsmittel (11) zur Erzeugung eines Signals, insbesondere Reedschalter, aufweist, wobei die Aufzeichnungseinheit (12) eingerichtet ist, das Signal zu empfangen.

## Claims

1. A system for monitoring wind influences on a working machine (1), in particular a mobile crane or crawler crane, comprising:
- at least one detection unit (10) that is arranged on the working machine (1) and by means of which a current wind speed can be detected;
- a recording unit (12) that is configured to receive, to store, and to transmit data of the at least one detection unit (10) during and outside the operation of the working machine (1);
- a controller (14) of the working machine (1) that is configured to determine a current working machine state;
- an external processing unit (16) that is configured to receive and to process data from the detection unit (10) relating to the current wind speed and data from the controller (14) directly or indirectly and in particular wirelessly; and
- an output device (18) that is configured to receive data from the external processing unit (16), in particular wirelessly,
- wherein the controller (14) and/or the external processing unit (16) is/are configured to determine a limit value for a wind speed in dependence on the current working machine state; and
- wherein the output device (18) is configured to output a warning on a reaching and/or exceeding and/or impending reaching of the limit value by the current wind speed,
**characterized in that**
- the external processing unit (16) is configured to compare the data received from the recording unit (12) relating to the current wind speed and the data received by the controller (14) relating to the limit value with one another, with the external processing unit (16) further being configured to use a limit value last received by the controller (14) in operation in a time period in which the working machine (1) is out of operation for the comparison.

2. A system in accordance with claim 1, **characterized in that** an energy source is provided by means of which the recording unit is also suppliable with energy with a working machine out of operation and that is preferably arranged on the working machine, with the energy source preferably comprising a battery of the working machine (1), a battery assigned to the recording unit (12), and/or an energy converter, in particular a solar cell.

3. A system in accordance with claim 1 or claim 2, **characterized in that** the output device (18) is configured to present, in particular to graphically present, data relating to a current wind speed and/or the limit value and/or to a weather forecast and/or to a current working machine state and/or to the current configuration of the working machine.

4. A system in accordance with one of the preceding claims, **characterized in that** the external processing unit (16) is configured to determine with reference to the transmission of the data by the controller (14), in particular with reference to transmission intervals, that the working machine (1) is out of operation and to continue to receive data from the recording unit (12) relating to a current wind speed.

5. A system in accordance with one of the preceding claims, **characterized in that** the external processing unit (16) is configured to receive data from the controller (14) relating to a current position of the working machine (1) and/or to a current working machine state and/or to the current configuration of the working machine (1) and/or to the payload values of the working machine (1) and/or to limit values for wind speeds in dependence on the working machine state and/or to receive data from an external service (20) relating to a weather forecast.

6. A system in accordance with one of the preceding claims, **characterized in that** at least one sensor (22) is provided at the working machine (1) by means of which a parameter of the current working machine state is detectable, with the controller (14) being configured to receive data from the at least one sensor (22).

7. A system in accordance with one of the preceding claims, **characterized in that** at least one transmission unit (24) is provided at the working machine (1) and is configured to transmit data from the controller (14) and/or from the recording unit (12) wirelessly to the external processing unit (16).

8. A system in accordance with one of the preceding claims, **characterized in that** the controller (14) is configured to receive the data from the at least one detection unit (10) and to preferably present data relating to the current wind speed and/or to the limit value on a display unit of the working machine (1).

9. A system in accordance with one of the preceding claims, **characterized in that** data relating to the current configuration of the working machine (1) and/or payload values and/or limit values for wind speeds in dependence on the working machine state and/or on the configuration of the working machine are stored in the controller (14) or in a memory (26) readable by the controller and/or by the external processing unit (16).

10. A system in accordance with one of the preceding claims, **characterized in that** a position detection unit (28), in particular a GPS module, arranged at the working machine (1) for the detection of the current position of the working machine (1) is provided, with the controller (14) being configured to receive position related data from the position detection unit (28).

11. A system in accordance with one of the preceding claims, **characterized in that** the at least one detection unit (10) is an anemometer, in particular a cup anemometer, and is preferably arranged at a boom (3, 4) of the working machine (1).

12. A system in accordance with one of the preceding claims, **characterized in that** the at least one detection unit (10) works without an energy supply and has a signal generation means (11) for generating a signal, in particular a reed switch, with the recording unit (12) being configured to receive this signal.

## Revendications

1. Système de surveillance des influences du vent sur un engin de travail (1), en particulier une grue mobile ou à chenilles, comprenant :
- au moins une unité de détection (10) disposée sur l'engin de travail (1), au moyen de laquelle une vitesse du vent actuelle peut être détectée,
- une unité d'enregistrement (12), qui est configurée pour recevoir, enregistrer et transmettre des données de l'au moins une unité de détection (10) pendant le service et hors service de l'engin de travail (1),
- une commande (14) de l'engin de travail (1), qui est configurée pour déterminer un état actuel de l'engin de travail,
- une unité de calcul externe (16), qui est configurée pour recevoir directement ou indirectement, et en particulier sans fil, des données provenant de l'unité de détection (10) concernant la vitesse du vent actuelle ainsi que des données provenant de la commande (14), et les traiter, et
- un appareil de sortie (18), qui est configuré pour recevoir, en particulier sans fil, des données provenant de l'unité de calcul externe (16),
- dans lequel la commande (14) et/ou l'unité de calcul externe (16) est/sont configurées pour déterminer une valeur limite pour une vitesse du vent en fonction de l'état actuel de l'engin de travail et
- dans lequel l'appareil de sortie (18) est configuré pour émettre un avertissement lorsque la valeur limite est atteinte et/ou dépassée et/ou menace d'être atteinte par la vitesse du vent actuelle,
**caractérisé en ce que**
- l'unité de calcul externe (16) est configurée pour comparer entre elles les données reçues par l'unité d'enregistrement (12) concernant la vitesse du vent actuelle et les données reçues par la commande (14) concernant la valeur limite, l'unité de calcul externe (16) étant en outre configurée pour, dans une période dans laquelle l'engin de travail (1) est hors service, tenir compte, pour la comparaison, d'une dernière valeur limite reçue par la commande (14) pendant le service.

2. Système selon la revendication 1, **caractérisé en ce qu'**une source d'énergie est prévue, au moyen de laquelle l'unité d'enregistrement peut être alimentée en énergie même lorsque l'engin de travail est hors service, et qui est de préférence agencée sur l'engin de travail, la source d'énergie comprenant de préférence une batterie de l'engin de travail (1), une batterie attribuée à l'unité d'enregistrement (12) et/ou un convertisseur d'énergie, en particulier une cellule solaire.

3. Système selon la revendication 1 ou 2, **caractérisé en ce que** l'appareil de sortie (18) est configuré pour représenter, en particulier représenter graphiquement, des données concernant une vitesse du vent actuelle et/ou la valeur limite et/ou une prévision météorologique et/ou un état actuel de l'engin de travail et/ou la configuration actuelle de l'engin de travail.

4. Système selon l'une des revendications précédentes, **caractérisé en ce que** l'unité de calcul externe (16) est configurée pour constater, à l'aide de la transmission des données provenant de la commande (14), en particulier à l'aide d'intervalles de transmission, que l'engin de travail (1) est hors service et continuer à recevoir des données provenant de l'unité d'enregistrement (12) concernant une vitesse du vent actuelle.

5. Système selon l'une des revendications précédentes, **caractérisé en ce que** l'unité de calcul externe (16) est configurée pour recevoir des données provenant de la commande (14) concernant une position actuelle de l'engin de travail (1) et/ou un état actuel de l'engin de travail et/ou la configuration actuelle de l'engin de travail (1) et/ou des valeurs de charge de l'engin de travail (1) et/ou des valeurs limites pour des vitesses du vent en fonction de l'état de l'engin de travail et/ou recevoir des données provenant d'un service externe (20) concernant une prévision météorologique.

6. Système selon l'une des revendications précédentes, **caractérisé en ce qu'**au moins un capteur (22) est prévu sur l'engin de travail (1), au moyen duquel un paramètre de l'état actuel de l'engin de travail peut être détecté, la commande (14) étant configurée pour recevoir des données provenant de l'au moins un capteur (22).

7. Système selon l'une des revendications précédentes, **caractérisé en ce qu'**au moins une unité de transmission (24) est prévue sur l'engin de travail (1), laquelle est configurée pour transmettre sans fil des données provenant de la commande (14) et/ou de l'unité d'enregistrement (12) à l'unité de calcul externe (16).

8. Système selon l'une des revendications précédentes, **caractérisé en ce que** la commande (14) est configurée pour recevoir les données provenant de l'au moins une unité de détection (10) et de préférence représenter des données concernant la vitesse du vent actuelle et/ou la valeur limite sur une unité d'affichage de l'engin de travail (1).

9. Système selon l'une des revendications précédentes, **caractérisé en ce que** des données concernant la configuration actuelle de l'engin de travail (1) et/ou des valeurs de charge et/ou des valeurs limites pour des vitesses du vent en fonction de l'état de l'engin de travail et/ou de la configuration de l'engin de travail sont enregistrées dans la commande (14) ou dans une mémoire (26) lisible par la commande et/ou par l'unité de calcul externe (16).

10. Système selon l'une des revendications précédentes, **caractérisé en ce qu'**une unité de détection de position (28), en particulier un module GPS, agencée sur l'engin de travail (1) est prévue pour détecter la position actuelle de l'engin de travail (1), la commande (14) étant configurée pour recevoir des données relatives à la position provenant de l'unité de détection de position (28).

11. Système selon l'une des revendications précédentes, **caractérisé en ce que** l'au moins une unité de détection (10) est un anémomètre, en particulier un anémomètre à coupelles, et est de préférence agencée sur une flèche (3, 4) de l'engin de travail (1).

12. Système selon l'une des revendications précédentes, **caractérisé en ce que** l'au moins une unité de détection (10) fonctionne sans alimentation en énergie et présente un moyen de génération de signal (11) pour générer un signal, en particulier un interrupteur à lame souple, l'unité d'enregistrement (12) étant configurée pour recevoir le signal.
